# DEMANDE DE BREVET EUROPEEN

(11) **EP 4 717 370 A1**
(43) Date de publication de la demande: **01.04.2026**
(21) Numéro de dépôt: 25200427.0
(22) Date de dépôt: 05.09.2025
(51) Int. Cl.: B09C 1/06, B09C 1/08, B09C 1/00

(54) **PROCÉDÉ ET SYSTÈME DE DÉGRADATION ALCALINO-THERMALE À PRESSION AMBIANTE DE SUBSTANCES PERFLUOROALKYLÉES ET POLYFLUOROALKYLÉES PRÉSENTES DANS DE LA TERRE POLLUÉE**

(30) Priorité: 30.09.2024 FR 2410495
(71) Demandeur: ORTEC Générale de Dépollution, 13799 Aix-en-Provence (FR)
(72) Inventeur: CHENE, Christophe, 69740 GENAS (FR); JOHANSSON, Clotilde, 69003 LYON (FR)
(74) Mandataire: Gevers & Orès

(57) **Abrégé**

- Procédé et système de dégradation alcalino-thermale à pression ambiante de substances perfluoroalkylées et polyfluoroalkylées présentes dans de la terre polluée.
- Le procédé (P) de dégradation alcalino-thermale de substances PFAS comporte notamment une étape d'incorporation (E1) pour incorporer un composé alcalin et éventuellement un adjuvant dans la terre polluée, une étape de chauffage (E2) pour chauffer la terre polluée comprenant le composé alcalin et l'adjuvant jusqu'à une température de dégradation comprise entre 100°C et 290°C, l'étape de chauffage (E2) étant mise en œuvre à la pression ambiante, et une étape d'extraction (E3) pour extraire les gaz générés pendant l'étape de chauffage (E2), ainsi que de préférence une étape de traitement des gaz extraits (E4), ce procédé (P) permettant de réaliser une dégradation des substances PFAS, à grande échelle, à coût réduit, et de façon relativement simple et très efficace.

## Description

### Domaine technique

La présente invention concerne un procédé et un système de dégradation alcalino-thermale de substances perfluoroalkylées et polyfluoroalkylées présentes dans de la terre polluée.

### État de la technique

On sait que les substances per- et polyfluoroalkylées, dites substances PFAS (pour « per- and polyfluoroalkyl substances » en anglais) ci-après, également appelées « polluants éternels », sont très stables et mobiles dans l'environnement, de manière à être à l'origine d'une contamination généralisée à échelle mondiale. L'impact de certaines de ces substances PFAS sur la santé (par exemple le perfluorooctane sulfonate (PFOS) ou l'acide perfluorooctanoïque (PFOA)) a conduit à l'établissement de concentrations seuils dans certains pays, notamment pour l'eau potable.

Des études sur la dégradation des substances PFAS sont actuellement en plein essor dans la communauté scientifique, tant académique qu'industrielle. En particulier, des procédés thermiques, appliqués aux eaux polluées ainsi qu'aux sols, sont étudiés.

En outre, une technique envisagée, qui a initialement été étudiée dans le domaine des eaux, est un procédé HALT (pour « Hydrothermal ALkaline Treatment » en anglais), qui représente une technique de dégradation hydrothermale des composé PFAS. Le procédé envisagé est réalisé en réacteur fermé, avec une montée à la fois en température (jusqu'à 400 °C) et en pression (jusqu'à 25 MPa), en présence de soude.

Toutefois, ce procédé envisagé n'est pas applicable à grande échelle, notamment pour les raisons suivantes :
- le faible volume de terre polluée qu'il est possible de traiter en réacteur fermé (pour la montée en pression), ce qui limite le débit du traitement ;
- l'importante dose de soude qui est utilisée dans les essais présentés ; et
- un coût élevé, notamment par rapport à d'autres techniques de dégradation des substances PFAS.

En cas de dégradation par incinération, les températures nécessaires à la dégradation des substances PFAS sont généralement de l'ordre de 800°C à 1000°C.

Il existe donc un besoin de disposer d'un procédé permettant de réaliser une dégradation des substances PFAS, à grande échelle, à coût réduit, et de façon efficace.

### Exposé de l'invention

La présente invention a pour objet de satisfaire ce besoin. Elle concerne un procédé de dégradation alcalino-thermale de substances perfluoroalkylées et polyfluoroalkylées (ou substances PFAS) présentes dans de la terre polluée.

Selon l'invention, ledit procédé comporte au moins les étapes suivantes :
- une étape d'incorporation, mise en œuvre par au moins un dispositif d'incorporation, pour incorporer au moins un composé alcalin dans la terre polluée ;
- une étape de chauffage, mise en œuvre par au moins un dispositif de chauffage, pour chauffer la terre polluée comprenant le composé alcalin jusqu'à une température dite de dégradation, la température de dégradation étant comprise entre 100°C et 290°C, et de préférence entre 180°C et 290°C, et l'étape de chauffage étant mise en œuvre à la pression ambiante ; et
- une étape d'extraction de gaz, mise en œuvre par au moins un dispositif d'extraction, pour extraire les gaz générés pendant l'étape de chauffage.

Ainsi, tout le procédé (et notamment l'étape de chauffage) est mis en œuvre à pression ambiante (donc dans un milieu non pressurisé), avec une extraction des gaz (générés par la dégradation et potentiellement nocifs), c'est-à-dire sans utiliser de réacteur fermé, ce qui permet de ne pas être limité en volume de terre polluée traitée. De plus, de façon surprenante, le procédé de dégradation est particulièrement efficace avec une étape de chauffage réalisée à des températures pas particulièrement élevées et avec une concentration de composé alcalin réduite, ce qui permet de réduire le coût et de faciliter la mise en œuvre du procédé.

Par conséquent, grâce à l'invention, on dispose d'un procédé permettant de réaliser une dégradation des substances PFAS, à grande échelle, à coût réduit, et de façon efficace et relativement simple (par un simple chauffage à pression ambiante).

Dans le cadre de la présente invention, on entend :
- par « terre polluée », de la terre ou tout autre matière, située notamment dans le sol ou excavée d'un site, y compris de la terre saturée en eau, qui est contaminée par des substances PFAS ; et
- par « dégradation alcalino-thermale », une dégradation qui est réalisée à la fois par une action alcaline (via l'incorporation d'un composé alcalin dans la terre polluée à traiter) et une action thermique (à savoir un chauffage jusqu'à une température de dégradation).

Dans un premier mode de réalisation, l'étape d'incorporation utilise comme composé alcalin au moins l'un des alcalins suivants : l'oxyde de calcium (CaO), l'hydroxyde de calcium (Ca(OH)₂).

En outre, dans un second mode de réalisation, en complément ou en variante du premier mode de réalisation, l'étape d'incorporation utilise comme composé alcalin au moins l'un des alcalins suivants : la soude (NaOH), l'hydroxyde de potassium (KOH), l'hydrogénocarbonate de sodium (NaHCO₃), l'oxyde de potassium (K₂O), l'oxyde de sodium (Na₂O). Ces derniers alcalins présentent l'avantage d'être plus solubles dans l'eau que les alcalins du premier mode de réalisation, ce qui simplifie l'étape d'homogénéisation.

En outre, avantageusement, à l'étape d'incorporation, le composé alcalin est incorporé sous l'une des formes suivantes :
- sous forme liquide ;
- sous forme solide.

Dans un mode de réalisation particulier, l'étape d'incorporation comprend une opération de malaxage de la terre polluée et du composé alcalin incorporé, notamment lorsqu'il est incorporé sous forme solide.

Avantageusement, à l'étape d'incorporation, le composé alcalin est incorporé dans la terre polluée dans une proportion comprise entre 0,01 et 0,2 kilogramme de composé alcalin par kilogramme de terre polluée. Dans une réalisation particulière, la proportion de composé alcalin est comprise entre 0,0001 et 0,2 kilogramme de composé alcalin par kilogramme de terre polluée, c'est-à-dire une proportion réduite de composé alcalin.

Par ailleurs, dans un mode de réalisation particulier, à l'étape d'incorporation, au moins un adjuvant pour catalyser la réaction de dégradation mise en œuvre, est incorporé dans la terre polluée. Un tel adjuvant est prévu, notamment, pour réagir avec les sous-produits de dégradation des substances PFAS, afin de favoriser la dégradation des composés mères par disparition des sous-produits.

De façon avantageuse, l'étape d'incorporation utilise comme adjuvant : CaCO₃, MgO, FeO(OH), Fe(OH)₃, Al(OH)₃, ZnCO₃ ou des silicates d'aluminium.

En outre, avantageusement, l'étape de chauffage est mise en œuvre à l'aide d'un dispositif de chauffage comprenant au moins certains des éléments chauffants suivants :
- des éléments chauffants à alimentation électrique ;
- des éléments chauffants alimentés par une source d'énergie utilisant un carburant (liquide ou gazeux) ;
- des éléments chauffants à fluides caloporteurs.

Par ailleurs, dans un premier mode de réalisation, ledit procédé est mis en œuvre sur un site de traitement, par exemple une aire de traitement (sur site ou hors site) ou un centre de traitement, sur lequel a été amenée la terre polluée au cours d'une étape préliminaire (après son excavation).

En outre, dans un second mode de réalisation, ledit procédé est mis en œuvre in-situ, c'est-à-dire à l'endroit où se trouve la terre polluée, par exemple sur un site industriel.

Par ailleurs, dans un mode de réalisation particulier, le procédé de dégradation comporte également une étape de traitement, mise en œuvre par au moins un dispositif de traitement, pour traiter les gaz extraits à l'étape d'extraction. Le procédé de dégradation peut également comporter une étape de contrôle précisée ci-dessous.

Le procédé comporte, en outre, une étape préliminaire pour éventuellement acheminer la terre polluée et pour mettre en place les dispositifs qui sont utilisés pour la mise en œuvre du procédé de dégradation.

La présente invention concerne également un système de dégradation alcalino-thermale de substances perfluoroalkylées et polyfluoroalkylées (ou substances PFAS) présentes dans de la terre polluée.

Selon l'invention, ledit système comporte notamment :
- au moins un dispositif d'incorporation configuré pour incorporer au moins un composé alcalin dans la terre polluée ;
- au moins un dispositif de chauffage configuré pour chauffer la terre polluée comprenant le composé alcalin jusqu'à une température dite de dégradation, la température de dégradation étant comprise entre 100°C et 290°C (et de préférence entre 180°C et 290°C) et le chauffage étant réalisé à la pression ambiante ; et
- au moins un dispositif d'extraction configuré pour extraire les gaz générés pendant le chauffage mis en œuvre par le dispositif de chauffage.

### Brève description des figures

Les figures annexées feront bien comprendre comment l'invention peut être réalisée. Sur ces figures, des références identiques désignent des éléments semblables.
La figure 1 est une vue schématique d'un mode de réalisation particulier d'un système de dégradation.
La figure 2 le schéma synoptique d'un mode de réalisation particulier d'un procédé de dégradation.
La figure 3 est une vue schématique d'un site de traitement sur lequel est mis en œuvre un procédé de dégradation à l'aide d'un système de dégradation conforme à un premier mode de réalisation.
La figure 4 est une vue schématique d'un site dont le sol comprend une terre polluée, dans laquelle est mis en œuvre un procédé de dégradation à l'aide d'un système de dégradation conforme à un second mode de réalisation.

### Description détaillée

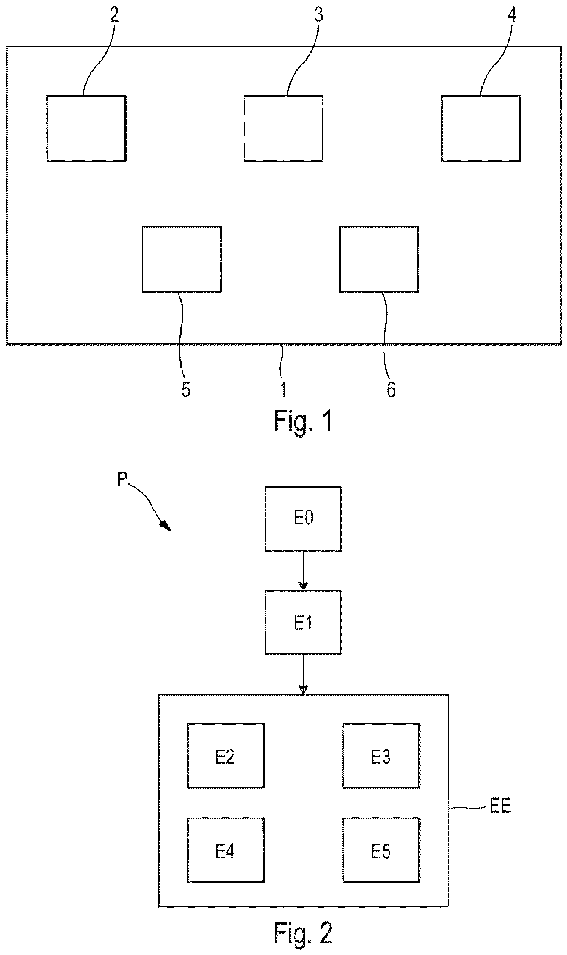

Le système 1, illustrant l'invention et représenté schématiquement sur la figure 1, est destiné à réaliser une dégradation alcalino-thermale de substances PFAS (pour « per- and polyfluoroalkyl substances » en anglais, c'est-à-dire des substances per- et polyfluoroalkylées) présentes dans de la terre polluée (ou contaminée), par exemple dans un sol pollué.

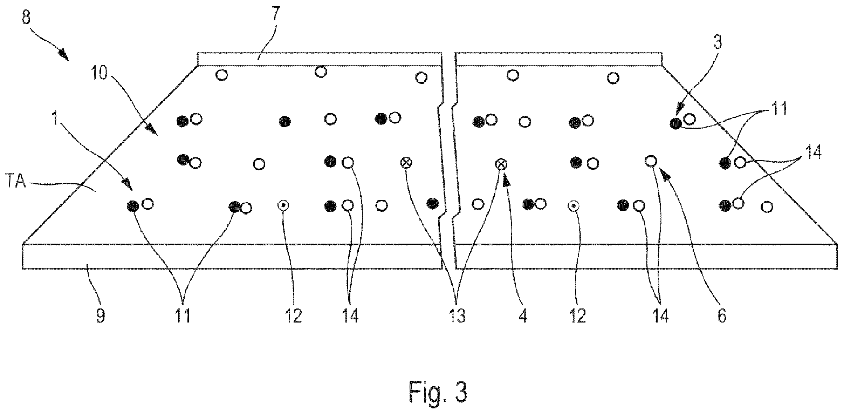

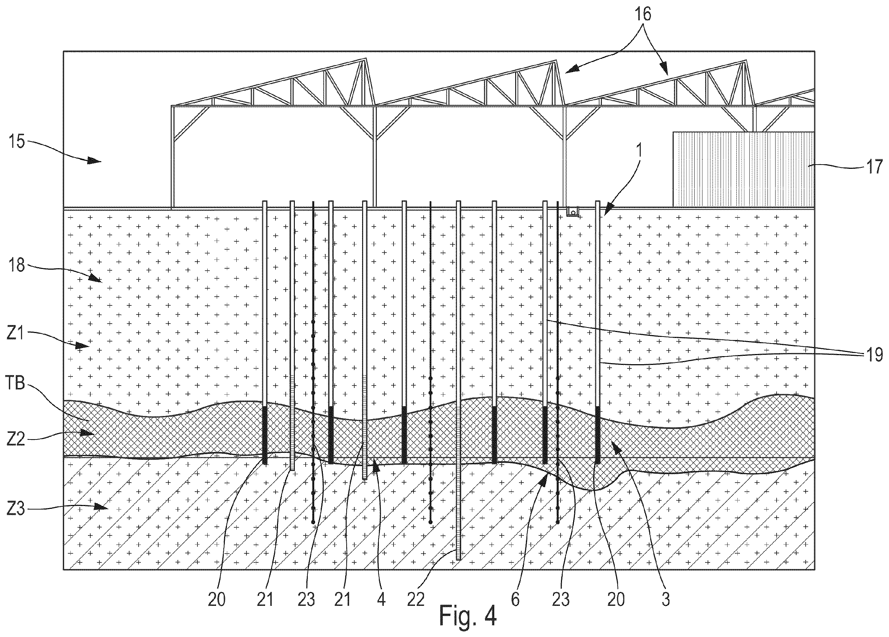

Une telle terre polluée (contaminée par des substances PFAS qui sont des contaminants environnementaux persistants), telle que la terre polluée TA, TB représentée sur les figures 3 et 4, peut être présente sur divers types de site, et notamment sur des sites industriels, des sites d'entraînement incendie ou incendiés (avec un emploi de mousses AFFF), des sites de traitement des eaux usées, des sites de stockage ou de gestion de déchets, ...

De façon générale, le système 1 comporte, comme représenté très schématiquement sur la figure 1 :
- un dispositif d'incorporation 2 configuré pour incorporer au moins un composé alcalin dans la terre polluée TA, TB ;
- un dispositif de chauffage 3 configuré pour chauffer la terre polluée TA, TB comprenant le composé alcalin jusqu'à une température dite de dégradation. La température de dégradation est comprise entre 100°C et 290°C (et de préférence entre 180°C et 290°C) et le chauffage est réalisé à la pression ambiante ; et
- un dispositif d'extraction 4 configuré pour extraire les gaz générés pendant le chauffage mis en œuvre par le dispositif de chauffage 3.

Le dispositif de chauffage 3 comprend des éléments chauffants usuels. Tout type d'élément chauffant, apte à chauffer la terre polluée à la température de dégradation souhaitée, peut être envisagé. A titre d'illustration, le dispositif de chauffage 3 peut comprendre au moins certains des éléments chauffants suivants :
- des éléments chauffants électriques comprenant, par exemple, des résistances électriques qui sont alimentées en courant électrique ;
- des éléments chauffants alimentés par une source d'énergie utilisant un carburant (ou combustible) usuel.

La ou les sources de chaleur (de type électrique, combustible ou autre), utilisées par le dispositif de chauffage 3, peuvent notamment être employées pour chauffer un fluide que l'on fait circuler dans des tuyaux intégrés dans la terre polluée.

En outre, dans un mode de réalisation préféré, le système 1 comporte également un dispositif de traitement 5 pour traiter les gaz extraits par le dispositif d'extraction 4, comme précisé ci-dessous.

Par ailleurs, le système 1 comporte également un dispositif de contrôle 6 pour contrôler le système 1 et son fonctionnement, et en particulier pour contrôler la température dans la terre polluée, générée par le dispositif de chauffage 3.

Le système 1, tel que décrit ci-dessus, est apte à mettre en œuvre un procédé P de dégradation alcalino-thermale de substances PFAS présentes dans de la terre polluée.

Ce procédé P comporte, comme représenté sur la figure 2 :
- une étape d'incorporation E1, mise en œuvre par le dispositif d'incorporation 2, pour incorporer au moins un composé alcalin dans la terre polluée ; et
- un ensemble EE d'étapes comprenant une pluralité d'étapes E2 à E5, qui sont mises en œuvre (au moins en partie) simultanément, et ceci après la mise en œuvre de l'étape d'incorporation E1.

Cet ensemble EE d'étapes comprend, notamment :
- une étape de chauffage E2, mise en œuvre par le dispositif de chauffage 3, pour chauffer la terre polluée (comprenant le composé alcalin qui a été incorporé à l'étape d'incorporation E1) jusqu'à la température de dégradation, à laquelle est chauffée et maintenue la terre polluée pendant toute cette étape de chauffage E2 ; et
- une étape d'extraction E3, mise en œuvre par le dispositif d'extraction 4, pour extraire les gaz générés pendant l'étape de chauffage E2.

Le chauffage de la terre polluée, combinée à l'action au moins du composé alcalin, va notamment dégrader les substances PFAS présentes dans la terre polluée et va produire des gaz, en particulier des gaz formés (au moins en partie) par les produits générés par la dégradation desdites substances PFAS. Ces gaz, susceptibles de contenir des substances nocives, sont extraits de la terre polluée (à l'étape d'extraction E3) pour éviter qu'elles ne soient dispersées dans l'air environnant. Ces gaz extraits peuvent ensuite être traités dans une étape de traitement E4.

Dans un mode de réalisation particulier, l'ensemble EE d'étapes du procédé P (de dégradation alcalino-thermale) comporte également une telle étape de traitement E4, mise en œuvre par le dispositif de traitement 5, pour traiter les gaz extraits à l'étape d'extraction E3, ainsi qu'une étape de contrôle E5 précisée ci-dessous.

Le procédé P comporte, en outre, une étape préliminaire E0 destinée en particulier à préparer la terre polluée à traiter et à mettre en place les différents dispositifs du système 1, pour pouvoir ensuite mettre en œuvre l'ensemble EE d'étapes.

On décrit à présent, plus en détail, les différentes étapes du procédé P.

A l'étape d'incorporation E1, des opérateurs incorporent donc, à l'aide du dispositif d'incorporation 2, au moins un composé alcalin, dans la terre polluée. Dans un premier mode de réalisation, ils incorporent comme composé alcalin au moins l'un des alcalins suivants : l'oxyde de calcium (CaO), l'hydroxyde de calcium (Ca(OH)₂).

En outre, dans un second mode de réalisation, en complément ou en variante du premier mode de réalisation, à l'étape d'incorporation E1, les opérateurs incorporent comme composé alcalin au moins l'un des alcalins suivants : la soude (NaOH), l'hydroxyde de potassium (KOH), l'hydrogénocarbonate de sodium (NaHCO₃), l'oxyde de potassium (K₂O), l'oxyde de sodium (Na₂O). Ces derniers alcalins présentent l'avantage d'être plus solubles dans l'eau que les alcalins du premier mode de réalisation, ce qui simplifie l'homogénéisation.

La proportion (notamment le rapport massique) d'alcalin incorporé est variable selon le type d'alcalin utilisé et la concentration en PFAS dans les sols à traiter. Dans un mode de réalisation particulier, le composé alcalin est incorporé dans la terre polluée dans une proportion comprise entre 0,01 et 0,2 kilogramme de composé alcalin par kilogramme de terre polluée. Dans une réalisation particulière, la proportion de composé alcalin est comprise entre 0,0001 et 0,2 kilogramme de composé alcalin par kilogramme de terre polluée, c'est-à-dire une proportion réduite de composé alcalin.

Ainsi, une quantité relativement réduite de composé alcalin est suffisante pour mettre en œuvre le procédé P de dégradation alcalino-thermale, ce qui réduit le coût et facilite la mise en œuvre.

Dans une première mise en œuvre, le composé alcalin est incorporé sous forme liquide à l'étape d'incorporation E1.

Pour ce faire, dans un mode de réalisation particulier, le composé alcalin, par exemple de la soude, est dissoute dans un liquide, de préférence dans de l'eau, et ce liquide est ensuite injecté par des moyens usuels (faisant partie du dispositif d'incorporation) dans la terre polluée.

L'injection du composé alcalin sous cette forme liquide peut être réalisée, soit dans un mode gravitaire par l'intermédiaire de moyens d'injection (puits, drain, ...), soit sous pression via une injection directe ou par l'intermédiaire d'un dispositif d'injection, par exemple des tubes à manchettes.

En outre, dans une seconde mise en œuvre de cette étape d'incorporation E1, le composé alcalin est incorporé sous forme solide.

Pour ce faire, l'une des techniques usuelles suivantes peut être utilisée : le malaxage de sol in-situ, l'injection de boues ou de gel particulaire avec le composé alcalin solide.

Dans un mode de réalisation particulier, l'étape d'incorporation E1 comprend également une opération de malaxage au cours de laquelle le mélange de terre polluée et de composé alcalin qui y est incorporé est malaxé.

Pour ce faire, on utilise des techniques usuelles de malaxage. Un tel malaxage est notamment réalisé lorsque le composé alcalin est incorporé sous forme solide.

Quel que soit le mode d'incorporation utilisé, le dispositif d'incorporation 3 comprend des moyens usuels (non décrits davantage) pour mettre en œuvre cette incorporation.

Par ailleurs, dans un mode de réalisation particulier, à l'étape d'incorporation E1, des opérateurs incorporent également au moins un adjuvant dans la terre polluée. Cet adjuvant a pour but de catalyser la réaction de dégradation mise en œuvre dans la terre polluée.

Un tel adjuvant est prévu, notamment, pour réagir avec les sous-produits de dégradation des substances PFAS, afin de favoriser la dégradation des composés mères par disparition des sous-produits, et ainsi favoriser la dégradation alcalino-thermale mise en œuvre par le procédé P.

Pour ce faire, l'adjuvant peut, par exemple, être mélangé au composé alcalin lorsque ce dernier est dissout dans de l'eau (ou dans un autre liquide) pour une injection sous forme liquide.

Dans le cas d'un adjuvant incorporé sous forme solide, il peut être ajouté et mélangé au composé alcalin (avant son incorporation) lorsque ce dernier est incorporé sous forme solide.

A titre d'illustration, au moins l'un des adjuvants suivants peut être utilisé : CaCO₃, MgO, FeO(OH), Fe(OH)₃, Al(OH)₃, ZnCO₃ ou des silicates d'aluminium.

Toutefois, dans un mode de réalisation particulier, on utilise de préférence au moins l'un des trois adjuvants suivants : CaCO₃, MgO et Fe(OH)₃, qui sont particulièrement efficaces.

La proportion (notamment le rapport massique) d'adjuvant incorporé est variable selon le type d'adjuvant utilisé. Dans un mode de réalisation particulier, l'adjuvant est incorporé dans la terre polluée dans une proportion comprise entre 0,005 et 0,1 kilogramme d'adjuvant par kilogramme de terre polluée. Dans une réalisation particulière, la proportion est comprise entre 0,0001 et 0,1 kilogramme d'adjuvant par kilogramme de terre polluée.

Dans le cadre de la présente invention, tout le procédé P, et notamment l'étape de chauffage E2, sont mises en œuvre à la pression ambiante. Par conséquent, aucun dispositif (ou réacteur) fermé n'est nécessaire pour la mise en œuvre du procédé P, ce qui permet de réduire le coût et de simplifier la mise en œuvre dudit procédé P et surtout de mettre en œuvre le procédé P à grande échelle, c'est-à-dire sur des volumes importants de terre polluée.

Comme indiqué ci-dessus, l'étape de chauffage E2, mise en œuvre à l'aide du dispositif de chauffage 3, a pour but de chauffer la terre polluée (initialement à la température du sol) jusqu'à la température de dégradation et à maintenir la terre polluée à cette température de dégradation au cours de la mise en œuvre du procédé P de dégradation alcalino-thermale.

Cette température de dégradation est comprise entre 100°C et 290°C, et de préférence, elle est comprise entre 180°C et 290°C.

De préférence, l'étape d'extraction E3 est mise en œuvre dès que du gaz est généré par le chauffage réalisé à l'étape de chauffage E2. A cette étape d'extraction E3, les gaz générés pendant l'étape de chauffage E2 sont extraits de la terre polluée.

A titre d'illustration, à cette étape d'extraction E3, qui est mise en œuvre par le dispositif d'extraction 4, l'extraction peut être réalisée selon l'une des méthodes suivantes :
- les gaz formés sont extraits par aspiration de l'air chaud, à l'aide d'un système d'aspiration usuel faisant partie du dispositif d'extraction 4 ;
- les gaz formés sont extraits par un processus de type « venting ».

De façon usuelle, un processus de type « venting » comprend généralement les opérations suivantes :
- une installation de puits d'extraction. Des puits ou des tuyaux sont installés dans le sol à différentes profondeurs pour permettre l'extraction des gaz ;
- l'application d'une pression ou d'une dépression. De l'air peut être injecté dans le sol pour aider à refouler les gaz générés, ou une pompe peut être utilisée pour créer une dépression et aspirer les gaz vers la surface ; et
- les gaz extraits sont collectés.

Quel que soit le mode d'extraction utilisé, le dispositif d'extraction 4 comprend des moyens usuels (non décrits davantage) pour mettre en œuvre cette extraction.

Par ailleurs, dans un mode de réalisation particulier, l'ensemble EE d'étapes du procédé P (de dégradation alcalino-thermale) comprend également l'étape de traitement E4, mise en œuvre par le dispositif de traitement 5, pour traiter les gaz extraits à l'étape d'extraction E3.

Les gaz extraits sont traités pour éliminer les contaminants, notamment les sous-produits générés par la dégradation des substances PFAS et une éventuelle désorption thermique (volatilisation) des substances PFAS de plus petite taille, ainsi que tout autre composé extrait par l'augmentation de la température (matières organiques ou autres polluants), avant de les libérer dans l'atmosphère ou de les réutiliser dans le cadre d'une application particulière.

Pour ce faire, à titre d'illustration, les gaz extraits par un processus de type « venting », sont traités par le dispositif de traitement 5 en fonction des polluants présents dans le gaz, et par exemple par condensation, par oxydation, par lavage des gaz ou par filtration sur du charbon actif.

De même, à titre d'illustration pour les gaz extraits par aspiration de l'air chaud, les vapeurs de polluants sont traités par le dispositif de traitement 5 qui est également adapté au type de polluant ciblé et qui peut, par exemple, mettre en œuvre un refroidissement et une condensation des vapeurs, un lavage des gaz ou une adsorption sur charbon actif.

Quel que soit le mode de traitement utilisé, le dispositif de traitement 5 comprend des moyens usuels (non décrits davantage) pour mettre en œuvre ce traitement.

Les gaz ainsi traités, pour lesquels les contaminants nocifs ont été suffisamment éliminés, peuvent ensuite être libérés sans risque dans l'atmosphère autour de la zone de traitement. Ils peuvent également, pour certaines applications, être réutilisés, soit immédiatement, soit après stockage et éventuellement transport.

Par ailleurs, dans un mode de réalisation particulier, l'ensemble EE du procédé P (de dégradation) comprend également une étape de contrôle E5.

Cette étape de contrôle E5 a pour but de contrôler le procédé P lors de sa mise en œuvre et notamment de mesurer la température de la terre polluée et de veiller à ce qu'elle soit à la température de dégradation.

Pour mesurer la température de la terre polluée à l'étape de contrôle E5, le dispositif de contrôle 6 peut, notamment, comporter des thermocouples installés à différents points dans la terre polluée.

Tout le procédé P (et notamment l'étape de chauffage E2) est mis en œuvre à pression ambiante, avec une extraction des gaz potentiellement nocifs, qui sont générés par la dégradation, c'est-à-dire sans utiliser de réacteur fermé, ce qui permet de ne pas être limité en volume de terre polluée traitée. De plus, de façon surprenante, le procédé P de dégradation est particulièrement efficace avec une étape de chauffage E2 réalisée à des températures pas particulièrement élevées (notamment par rapport à la température de dégradation thermique des substances PFAS) et avec une concentration de composé alcalin réduite, ce qui permet de réduire le coût et de faciliter la mise en œuvre du procédé P.

Par conséquent, le système 1 et le procédé P permettent de réaliser une dégradation alcalino-thermale des substances PFAS, à grande échelle, à coût réduit, et de façon efficace et relativement simple.

Le système 1 et le procédé P, tels que décrits ci-dessus, peuvent être utilisés dans de nombreuses applications et dans des situations variées. En particulier, ils peuvent être mis en œuvre selon des modes de réalisation différents, et notamment à des endroits différents. Ainsi, ils peuvent notamment être mis en œuvre sur un site de traitement. Ils peuvent être également mis en œuvre in-situ, c'est-à-dire directement à l'endroit où se trouve la terre polluée, par exemple sur un site industriel.

Dans un premier mode de réalisation, le procédé P est mis en œuvre (à l'aide du système 1) sur un site de traitement, par exemple, sur une aire de traitement sur site (on-site) ou dans un centre de traitement (telle qu'une plateforme hors site), sur lequel a été amenée la terre polluée dans une étape préliminaire E0, après son excavation.

Dans un exemple de ce premier mode de réalisation, représenté sur la figure 3, le traitement est réalisé dans un centre de traitement 8 en pile chauffée.

Dans cet exemple de réalisation particulier, à l'étape préliminaire E0, la terre polluée TA est excavée de façon usuelle de l'endroit où elle se trouve et elle est acheminée dans le centre de traitement 8. Puis, cette terre polluée TA est disposée sur une surface 9 étanche.

L'étape d'incorporation E1 peut ensuite être mise en œuvre. Dans ce cas, la terre polluée TA peut, par exemple, être malaxée avec le composé alcalin et l'adjuvant. Le composé alcalin et l'adjuvant peuvent être appliqués sous forme liquide ou sous forme solide selon l'une des manières décrites ci-dessus.

La pile 10 est ensuite construite de façon usuelle avec la mise en place notamment :
- d'éléments chauffants 11 usuels, représentés par des points noirs sur la figure 3, qui font partie du dispositif de chauffage 3 ;
- des éléments 12 d'injection d'air, représentés par des ronds avec un point, et des éléments 13 d'extraction d'air, représentés par des ronds avec une croix, qui font partie du dispositif d'extraction 4 ; et
- des thermocouples 14, représentés par des ronds en trait épais, qui sont par exemple agencés à proximité des éléments chauffants 11 et qui font partie du dispositif de contrôle 6 (pour surveiller la température à l'étape de contrôle E5).

Une telle pile 10 (couverte par un élément de surface 7) présente, généralement, une taille moyenne de 500 à 2000 m³. On est ainsi en mesure de traiter un volume très important de terre polluée avec une seule mise en œuvre du procédé P.

Le nombre d'éléments chauffants 11 du dispositif de chauffage 3 et leur emplacement et leur espacement dans la pile 10, sont déterminés en fonction notamment de la conductivité et de la capacité thermique de la terre polluée TA, ainsi que de la source de chaleur du dispositif de chauffage 3. Les éléments chauffants 11 peuvent être alimentés par du gaz (brûleurs), par de l'électricité ou par tout autre source d'énergie, comme indiqué ci-dessus. La chaleur, générée par les éléments chauffants 11 du dispositif de chauffage 3, à l'étape de chauffage E2, est transmise à la terre polluée TA, par conduction et/ou convection et/ou irradiation au niveau des points chauds créés autour des éléments chauffants 11.

De plus, à l'étape d'extraction E3, les gaz formés sont extraits par aspiration de l'air chaud, via les éléments 13 d'extraction d'air du dispositif d'extraction 4.

Ces gaz (ou vapeurs) contenants des polluants sont ensuite traités, à l'étape de traitement E4, à l'aide d'un dispositif de traitement (non représenté), qui est adapté à la pollution ciblée et qui peut, par exemple, mettre en œuvre l'une des méthodes usuelles suivantes : refroidissement et condensation des vapeurs, lavage des gaz ou adsorption sur charbon actif, ...

En outre, dans un second mode de réalisation représenté sur la figure 4, le procédé P est mis en œuvre (à l'aide du système 1) in-situ, c'est-à-dire sur le site 15 où se trouve la terre polluée TB, par exemple sur un site industriel comprenant notamment des bâtiments 16 et des installations 17.

Dans ce second mode de réalisation, à l'étape préliminaire E0, le sol 18 (contenant la terre polluée TB) est laissé en place. Dans l'exemple représenté sur la figure 4, le sol 18 comprend verticalement, du haut vers le bas, différentes zones, à savoir :
- une zone non saturée Z1 ;
- une zone Z2, dans laquelle se trouve la terre polluée TB à traiter (pouvant être en zone saturée et/ou en zone insaturée) ; et
- une zone saturée Z3.

A l'étape préliminaire E0, différents éléments du système 1 sont mis en place, et notamment :
- des ouvrages 19 usuels, pourvus d'éléments chauffants 20 qui sont amenés dans la zone Z2 à traiter. Ces ouvrages 19 et ces éléments chauffants 20 font partie du dispositif de chauffage 3 ;
- des éléments 21 d'extraction de gaz qui font partie du dispositif d'extraction 4 et qui sont destinés à extraire des gaz de la zone non saturée Z1, et notamment les gaz générés par la dégradation des substances PFAS dans la terre polluée TB (ou par désorption thermique de substances PFAS de faible poids moléculaire ou bien d'autres polluants), qui se retrouvent dans cette zone non saturée Z ;
- des éléments 22 d'extraction d'eau qui aboutissent dans la zone saturée Z3 et qui sont destinés à extraire de l'eau de cette zone saturée Z3 ; et
- des thermocouples 23, qui sont par exemple agencés à proximité de certains des éléments chauffants 21, qui font partie du dispositif de contrôle 6 et qui sont destinés à mesurer la température (afin de pouvoir surveiller la température à l'étape de contrôle E5).

Ces différents éléments du système 1 sont installés par forage dans cet exemple de réalisation.

Pour ce faire, ces différents éléments, et notamment les ouvrages 19 du dispositif de chauffage 3 et les éléments 21 d'extraction de gaz du dispositif d'extraction 4, sont disposés dans le sol 18 en fonction de la géologie, des zones cibles à traiter et de l'accessibilité sur le site 15.

A l'étape d'incorporation E1, l'injection du composé alcalin et l'adjuvant (préparés sous forme liquide) peut être réalisée, soit dans un mode gravitaire par l'intermédiaire de moyens d'injection (puits, drain, ...), soit sous pression via une injection directe ou par l'intermédiaire de dispositifs d'injection, comme par exemple de tubes à manchettes. L'incorporation du composé alcalin et de l'adjuvant peut également être réalisée par l'intermédiaire d'autres dispositifs d'injection tels que le malaxage de sol in-situ, l'injection de boues ou de gel particulaire, avec des composés solides.

En outre, à l'étape d'extraction E3, les gaz du sol 18 sont extraits par le dispositif d'extraction 4, par exemple via un processus de type « venting » tel que décrit ci-dessus. Ces gaz (ou vapeurs) contenants des polluants sont ensuite traités, à l'étape de traitement E4, à l'aide d'un dispositif de traitement (non représenté) qui est adapté aux polluants présents dans les gaz extraits et qui peut, par exemple, mettre en œuvre l'une des méthodes usuelles suivantes : condensation, oxydation, lavage des gaz, filtration sur charbon, ...

Le système 1 et le procédé P, tels que décrits ci-dessus, qui mettent en œuvre une dégradation alcalino-thermale (obtenue donc par un chauffage combiné à un ajout de composé alcalin), sont particulièrement efficaces. Ils ont notamment été testés en laboratoire sur une terre polluée contaminée entre 1 200 µg/kg et 2 330 µg/kg de vingt substances PFAS, et ceci :
- dans un premier temps, en désorption thermique à 300°C sans ajout de composé alcalin, ce qui a donné comme résultat des abattements sur les vingt substances PFAS de 66% à 2 jours, 85,6% à 7 jours et 92,9% à 20 jours ; et
- dans un second temps, avec l'ajout de soude NaOH (permettant d'obtenir une terre polluée présentant un pH supérieur à 13) à 300°C, les abattements observés ont été grandement améliorés avec, dès 2 jours de traitement, 97,2% d'abattement dans la terre polluée, puis 99,8% sur 7 jours et 99,98% sur 20 jours.

Des essais similaires ont été réalisés à 260°C et 250°C induisant une volatilisation des vingt substances PFAS en 48 heures de chauffe de 23% à 250°C (témoin), contre un abattement des vingt substances PFAS en seulement 48 heures de chauffe de 63% en présence de NaOH (à 260°C), de 46% en présence de KOH (à 250°C), et 45% en présence de NaHCO₃ (à 250°C).

## Revendications

1. Procédé de dégradation alcalino-thermale à pression ambiante de substances perfluoroalkylées et polyfluoroalkylées présentes dans de la terre polluée,
**caractérisé en ce qu'**il comporte au moins les étapes suivantes :
- une étape d'incorporation (E1), mise en œuvre par au moins un dispositif d'incorporation (2), pour incorporer au moins un composé alcalin dans la terre polluée (TA, TB), le composé alcalin étant incorporé dans la terre polluée (TA, TB) dans une proportion comprise entre 0,0001 et 0,2 kilogramme de composé alcalin par kilogramme de terre polluée (TA, TB) ;
- une étape de chauffage (E2), mise en œuvre par au moins un dispositif de chauffage (3), pour chauffer la terre polluée (TA, TB) comprenant le composé alcalin jusqu'à une température dite de dégradation, la température de dégradation étant comprise entre 100°C et 290°C et l'étape de chauffage (E2) étant mise en œuvre à la pression ambiante ; et
- une étape d'extraction (E3), mise en œuvre par au moins un dispositif d'extraction (4), pour extraire les gaz générés pendant l'étape de chauffage (E2).

2. Procédé selon la revendication 1,
**caractérisé en ce que** l'étape d'incorporation (E1) utilise comme composé alcalin au moins l'un des alcalins suivants : la soude, l'hydroxyde de potassium, l'hydrogénocarbonate de sodium, l'oxyde de potassium, l'oxyde de sodium.

3. Procédé selon l'une des revendications 1 et 2,
**caractérisé en ce que** l'étape d'incorporation (E1) utilise comme composé alcalin au moins l'un des alcalins suivants : l'oxyde de calcium, l'hydroxyde de calcium.

4. Procédé selon l'une des revendications 1 à 3,
**caractérisé en ce qu'**à l'étape d'incorporation (E1), le composé alcalin est incorporé sous l'une des formes suivantes :
- sous forme liquide ;
- sous forme solide.

5. Procédé selon l'une quelconque des revendications précédentes,
**caractérisé en ce qu'**à l'étape d'incorporation (E1), le composé alcalin est incorporé dans la terre polluée (TA, TB) dans une proportion comprise entre 0,01 et 0,2 kilogramme de composé alcalin par kilogramme de terre polluée (TA, TB).

6. Procédé selon l'une quelconque des revendications précédentes,
**caractérisé en ce qu'**à l'étape d'incorporation (E1), au moins un adjuvant pour catalyser une réaction de dégradation mise en œuvre, est incorporé dans la terre polluée (TA, TB).

7. Procédé selon la revendication 6,
**caractérisé en ce que** l'étape d'incorporation (E1) utilise comme adjuvant : CaCO₃, MgO, FeO(OH), Fe(OH)₃, Al(OH)₃, ZnCO₃ ou des silicates d'aluminium.

8. Procédé selon l'une quelconque des revendications précédentes,
**caractérisé en ce que** l'étape de chauffage (E2) est mise en œuvre à l'aide d'un dispositif de chauffage (3) comprenant au moins certains des éléments chauffants (11, 20) suivants :
- des éléments chauffants à alimentation électrique ;
- des éléments chauffants alimentés par une source d'énergie utilisant un carburant ;
- des éléments chauffants à fluides caloporteurs.

9. Procédé selon l'une quelconque des revendications précédentes,
**caractérisé en ce que** la température de dégradation est comprise entre 180°C et 290°C.

10. Procédé selon l'une quelconque des revendications précédentes,
**caractérisé en ce que** ledit procédé (P) est mis en œuvre :
- sur un site de traitement (8), sur lequel a été amenée la terre polluée (TA) au cours d'une étape préliminaire (E0) ; ou
- in-situ.

11. Procédé selon l'une quelconque des revendications précédentes,
**caractérisé en ce qu'**il comporte une étape de traitement (E4), mise en œuvre par au moins un dispositif de traitement (5), pour traiter les gaz extraits à l'étape d'extraction (E3).

12. Système de dégradation alcalino-thermale de substances perfluoroalkylées et polyfluoroalkylées présentes dans de la terre polluée, **caractérisé en ce qu'**il comporte :
- au moins un dispositif d'incorporation (2) configuré pour incorporer au moins un composé alcalin dans la terre polluée (TA, TB), le composé alcalin étant incorporé dans la terre polluée (TA, TB) dans une proportion comprise entre 0,0001 et 0,2 kilogramme de composé alcalin par kilogramme de terre polluée (TA, TB) ;
- au moins un dispositif de chauffage (3) configuré pour chauffer la terre polluée (TA, TB) comprenant le composé alcalin jusqu'à une température dite de dégradation, la température de dégradation étant comprise entre 100°C et 290°C et le chauffage étant réalisé à la pression ambiante ; et
- au moins un dispositif d'extraction (4) configuré pour extraire les gaz générés pendant le chauffage mis en œuvre par le dispositif de chauffage (3).
